# EUROPÄISCHE PATENTANMELDUNG

(11) **EP 2 708 127 A2**
(43) Veröffentlichungstag der Anmeldung: **19.03.2014**
(21) Anmeldenummer: 13184461.5
(22) Anmeldetag: 13.09.2013
(51) Int. Cl.: A21B 1/40, A21B 1/28

(54) **Backofen mit stufenlos einstellbarem Brenner**

(30) Priorität: 14.09.2012 DE 102012216476
(71) Anmelder: MIWE Michael Wenz GmbH, 97450 Arnstein (DE)
(72) Erfinder: Späth, Hermann, 94333 Geiselhöring (DE); Illek, Joachim, 97782 Wolfsmünster (DE)
(74) Vertreter: Patentanwälte Freischem

(57) **Zusammenfassung**

Die Erfindung betrifft ein Verfahren zur Steuerung eines Backofens (1) mit:
• mindestens einem Backraum (4);
• einem stufenlos einstellaren Brenner (6);
• mindestens einem von Heizgasen durchströmten Heizelement (8);
• einer Steuervorrichtung (7) mit Prozessor (10) zur Steuerung der Backraumtemperatur und mit einem Speichermodul (11) zum Abspeichern der Temperaturwerte eines Backprogramms.

Es soll ein Etagen Backofen geschaffen werden, der das Backverhalten mindestens eines anderen Ofentyps simulieren kann.

Dies wird dadurch erreicht, dass in dem Speichermodul (11) Temperaturänderungsdaten mindestens eines Ofentyps abgespeichert sind und dass ein Backprogramm mit vorgegebenen Zeitabschnitten und den Zeitabschnitten zugeordneten Solltemperaturen vorgegeben wird, wobei durch den Prozessor (10) der Steuervorrichtung aus den Temperaturänderungsdaten, den Zeitabschnitten und den Solltemperaturen ein zeitlicher Verlauf der Temperatur im Backraum errechnet wird und wobei die Steuervorrichtung den Brenner (6) derart einstellt, dass die Backraumtemperatur dem errechneten zeitlichen Verlauf der Temperatur folgt.

## Beschreibung

Die Erfindung betrifft ein Verfahren zur Steuerung eines Backofens mit:
- mindestens einem Backraum;
- einem stufenlos einstellaren Brenner zur Erzeugung von Heizgasen;
- mindestens einem von den Heizgasen durchströmten Heizelement an oder in dem Backraum;
- einer Steuervorrichtung mit einem Prozessor zur Steuerung der Temperatur in dem Backraum, welche ein Speichermodul zum Abspeichern der Temperaturwerte eines Backprogramms aufweist.

Sie betrifft ferner einen derartigen Backofen und ein Computerprogrammprodukt für diesen Backofen.

Derartige, mit Brennergasen beheizte Backöfen werden üblicherweise als Etagenbacköfen von Großbäckereien und industriellen Backwarenherstellern eingesetzt. Es können hier in mehreren übereinander angeordneten Etagen, welche jeweils einen Backraum bilden, große Backflächen für die industrielle Backwarenfertigung realisiert werden. Ein Brenner heizt mehrere Etagen. Üblicherweise werden in derartigen Etagenbacköfen Brenner mit einem oder zwei diskreten Betriebszuständen im Brennbetrieb eingesetzt. Wenn die Temperatur in dem Backofen zu niedrig ist, wird der Brenner eingeschaltet, bis die angestrebte Temperatur erreicht ist. Ist die Temperatur im Backofen zu hoch, wird der Brenner abgestellt, bis die Backofentemperatur auf den angestrebten Wert abgesunken ist. Wenn ein konstanter Temperaturwert gehalten werden soll, wird der Brenner intermittierend betrieben, das heißt er wird kurzzeitig an- und kurzzeitig ausgestellt. Hierdurch pendelt die Temperatur in dem Backraum um den Sollwert.

In jüngerer Zeit wurde vorgeschlagen, stufenlos regelbare Brenner einzusetzen (vgl. zum Beispiel DE 196 11 887 A1 in Spalte 5, Zeile 3).

Aufgabe der Erfindung ist es, einen derartigen mit den Heizgasen eines Brenners betriebenen Backofen derart weiterzuentwickeln, dass das Backverhalten mindestens eines anderen Ofentyps simuliert werden kann.

Diese Aufgabe wird erfindungsgemäß dadurch gelöst, dass in dem Speichermodul Temperaturänderungsdaten mindestens eines Ofentyps abgespeichert sind und dass ein Backprogramm mit vorgegebenen Zeitabschnitten und den Zeitabschnitten zugeordneten Solltemperaturen vorgegeben wird, wobei durch den Prozessor der Steuervorrichtung aus den Temperaturänderungsdaten, den Zeitabschnitten und den Solltemperaturen ein zeitlicher Verlauf der Temperatur im Backraum errechnet wird und wobei die Steuervorrichtung den Brenner derart einstellt, dass die Backraumtemperatur dem errechneten zeitlichen Verlauf der Temperatur folgt.

In der Praxis können die Temperaturänderungsdaten z.B. durch Temperaturmessungen während des Betriebs eines Ofens des genannten Ofentyps ermittelt werden.

Mit anderen Worten sind in dem Speichermodul der Steuervorrichtung die Daten abgelegt, die es erlauben, das Temperaturverhalten unterschiedlicher Ofentypen zu simulieren. Unterschiedliche Ofentypen und ihr typenspezifischer Temperaturverlauf weisen für die Herstellung unterschiedlicher Backwaren besondere Vorzüge auf. Ferner sind die Bäcker oft an die Verwendung bestimmter Ofentypen gewöhnt. Ofentypen mit unterschiedlichem Temperaturverhalten sind zum Beispiel mit Dampf beheizte Ringrohröfen, mit Holz oder elektrisch beheizte Steinplattenöfen, Thermoöl-Öfen usw. Diese Öfen weisen in Abhängigkeit von der Temperatur des Heizmediums (Dampf oder Thermoöl oder Holzfeuer) unterschiedliche Beheizungsgeschwindigkeiten und Temperaturen auf. Diese Öfen weisen ferner unterschiedliche Trägheiten auf. So ist beispielsweise ein Thermoöl-Ofen äußerst träge, weil er für jede Etage einen mit Thermoöl befüllten Radiator aufweist und die in den Radiatoren des Thermoöl-Ofens befindlichen Mengen Thermoöl eine hohe Wärmekapazität haben.

Der erfindungsgemäße Vorschlag, in dem Speichermodul des mit Heizgas des Brenners beheizten Ofens die Temperaturänderungsdaten mindestens eines und vorzugsweise mehrerer Ofentypen abzuspeichern, ermöglicht es dem Bäcker, mit dem Etagenofen das thermische Verhalten des von ihm bevorzugten Ofens zu simulieren. Der Bäcker gibt einfach in der für ihn bekannten Weise ein Backprogramm mit vorgegebenen Zeitabschnitten und den Zeitabschnitten zugeordneten Solltemperaturen vor. Die Steuervorrichtung des Ofens berechnet mittels ihres Prozessors aus den abgespeicherten Temperaturänderungsdaten und dem vorgegebenen Backprogramm einen zeitlichen Verlauf der Temperatur im Backraum. Die Steuervorrichtung stellt den Brenner derart ein, dass die Backraumtemperatur dem errechneten zeitlichen Verlauf der Temperatur folgt.

Die Temperaturänderungsdaten weisen insbesondere Werte für die Temperaturänderung beim Beheizen eines Ofens des bestimmten Ofentyps und beim Abkühlen des Ofens des bestimmten Ofentyps auf. Diese Werte variieren stark mit der Bauart des Ofentyps. Wie weiter oben erwähnt, haben insbesondere die Temperatur der verwendeten Heizmedien, aber auch die Wärmespeicherkapazitäten der Bauelemente des Ofens und der darin befindlichen Strukturen und Heizmedien Einfluss auf die Temperaturänderungsgeschwindigkeit. Hierdurch ergibt sich auch ein besonderes Verhalten der Ofentypen bei geöffneter Tür des Backraums zum Entladen und Beschicken.

Die Temperaturänderungsdaten können beispielsweise durch Temperaturmessungen während des Betriebs eines Ofens des genannten Ofentyps ermittelt werden. Hierbei können weitere Eigenarten des bestimmten Ofentyps erfasst werden. Beispielsweise kann je nach verwandter Heiztechnik die Energiezufuhr in niedrigem Temperaturbereich effizienter und schneller erfolgen als in hohem Temperaturbereich oder umgekehrt. Hieraus ergibt sich, dass die Temperaturänderungsdaten unterschiedliche Temperaturänderungsgeschwindigkeiten in unterschiedlichen Temperaturwerten umfassen.

Es müssen aber nicht zwingend reale, gemessene Temperaturänderungsdaten bestimmter Ofentypen verwendet werden. Es ist auch möglich, idealisierte Temperaturänderungsdaten bestimmter Ofentypen zu verwenden. So können bestimmte Ofentypen eine zu starke Energiezufuhr ermöglichen, welche die Qualität der Backwaren beeinträchtigt. Übliche Phänomene sind das Anflämmen der Kruste der Backwaren durch zu große Hitze während des Beheizens. Die realen Temperaturänderungsdaten können derart abgeändert werden, dass eine übermäßige und die Backwarenqualität beeinträchtigende Energiezufuhr vermieden wird. In diesem Fall spiegeln die gespeicherten Temperaturänderungsdaten das Verhalten eines idealisierten Ofentyps wieder.

Die Temperaturänderungsdaten können also Temperaturänderungsgeschwindigkeiten, ggf. mit unterschiedlichen Werten für unterschiedliche Temparaturbereich umfassen. Es ist aber auch möglich, die Temperaturänderungsdaten in form von Referenz-Verläufen der Temperaturkurve abzuspeichern. Die Temperaturübergänge von sich ändernden Temperaturwerten, werden dann an die Referenz-Verläufe angeglichen.

In der Praxis kann an dem Backofen mindestens ein Temperatursensor angeordnet sein, der einen Temperaturmesswert abgibt, wobei die Steuervorrichtung den Brenner unter Berücksichtigung des Temperaturmesswerts regelt. Durch eine Temperaturerfassung während des Backvorgangs und eine geschlossene Regelschleife, mittels der der von der Steuervorrichtung eingestellte Temperaturwert durch den Temperatursensor konstant überwacht und optimiert wird, kann das Temperaturverhalten des Backofens an den simulierten Ofentyp optimal angepasst werden. In der Praxis können mehrere Temperatursensoren an dem Backofen vorhanden sein. Beispielsweise kann in dem Heizgasstrom des Brenners oder in dem Rücklauf des Hiezgases zum Brenner ein Temperatursensor vorhanden sein, der die Heizgastemperatur wiedergibt. Ferner können in mindestens einem Backraum an einem oder mehreren Orten Temperatursensoren vorhanden sein. Schließlich kann die Umgebungstemperatur erfasst werden, um den Temperaturverlauf in dem Backofen weitgehend unabhängig von der Temperatur der Umgebung gemäß den vorgegebenen Temperaturänderungsdaten und dem Backprogramm einstellen zu können.

In der Praxis können in dem Speichermodul Temperaturänderungsdaten mehrerer Ofentypen abgespeichert sein, wobei ein Nutzer über eine Eingabevorrichtung (z.B. Tastatur oder Touch-Screen) einen Ofentyp auswählt. Somit kann ein einziger Etagenofen je nach Wahl des Nutzers derart betrieben werden, dass er unterschiedliche Ofentypen simuliert. Bisher war es erforderlich, dass ein Bäcker zur Herstellung unterschiedlicher Backwaren mit optimaler Qualität unterschiedliche Ofentypen betreibt. Diese Notwendigkeit entfällt nun, da der oben beschriebene Backofen bei dem Betrieb gemäß dem oben beschriebenen Verfahren die verschiedenen Ofentypen simulieren kann.

In der Praxis können über eine Eingabevorrichtung Daten der in den Ofen eingebrachten Backwaren eingegeben werden, welche durch den Prozessor bei der Errechnung des zeitlichen Verlaufs der Temperatur im Backraum berücksichtigt werden. Es kann beispielweise die Backwarenart (Brötchen, Brote, Konditorwaren etc.) eingegeben werden. Ferner kann die Masse oder das Volumen der eingebrachten Backwaren eingegeben werden. Zur Erfassung der Masse kann beispielsweise eine Waage in den Boden der Bäckerei eingelassen sein, auf die ein Rollwagen aufgefahren wird, mit dem die Backwaren in den Ofen transportiert werden. Bei einer Beschickung mittels einer automatischen Beschickungsvorrichtung kann in diese Vorrichtung eine Waage integriert sein, die das Gewicht der Backwaren berücksichtigt. Da die Backwaren, genauer gesagt die zu backenden Teiglinge zur Herstellung der Backwaren, einen Einfluss auf das Temperaturverhalten des Ofens haben, kann diese zusätzliche Eingabe der auf die Backwaren bezogenen Daten zu einer weiteren Optimierung der Simulation des Temperaturverhaltens eines bestimmten Ofentyps beitragen.

Zum Erzielen eines Temperaturverhaltens des gewünschten Ofentyps, kann während der Öffnung des Ofens der Brenner betrieben werden. Einen nicht zu vernachlässigenden Einfluss auf die Qualität der Backwaren hat der Temperaturverlauf während des Öffnens der Backofentür oder der Verschlussklappe des Backraums. Backöfen mit einer hohen Speicherkapazität halten beispielsweise die Wärme und weisen schon eine kurze Zeit nach dem Beschicken des Backraums wieder die eingestellte, hohe Temperatur im Backraum auf. Dies gilt beispielsweise für Thermoöl-Öfen. Der vorliegende Etagenofen hat in der Regel eine geringere thermische Trägheit als die simulierten Ofentypen. Damit der Etagenofen nicht unzulässig schnell auskühlt oder hinreichend schnell den angestrebten Temperaturwert im Backraum erreicht, kann der Brenner während der Öffnung des Backraums weiterlaufen. Der sich hieraus ergebende geringfügig höhere Energieaufwand ist durch die gesteigerte Qualität der Backwaren durchaus gerechtfertigt.

Ferner kann zum Erzielen eines Temperaturverhaltens des Ofentyps, dessen Temperaturänderungsdaten verwendet werden, während einer Temperaturabsenkung ein Gebläse des Brenners ohne Brennstoffzufuhr betrieben wird, so dass die kalte Brennerluft durch das Heizelement strömt. Bei dem hier beschriebenen Ofen können stufenlos einstellbare Brenner mit einem Brennergebläse verwendet werden, welches dem Brenner Frischluft zuführt. Wenn die abgespeicherten Temperaturänderungsdaten eine Abkühlgeschwindigkeit vorgeben, die über der natürlichen Abkühlgeschwindigkeit des Etagenofens liegt, kann die Temperaturabsenkung dadurch beschleunigt werden, dass durch das Brennergebläse Frischluft in das Heizelement an oder in den Backraum geblasen wird, welche den Backraum kühlt.

Die Erfindung betrifft ferner ein Computerprogrammprodukt zum Steuern und/oder Regeln des Betriebs eines Backofens mit
- mindestens einem Backraum;
- einem stufenlos einstellaren Brenner zur Erzeugung von Heizgasen;
- mindestens einem von den Heizgasen durchströmten Heizelement an oder in dem Backraum;
- einer Steuervorrichtung mit einem Prozessor zur Steuerung der Temperatur in dem Backraum, welche ein Speichermodul zum Abspeichern der Temperaturwerte eines Backprogramms aufweist.

Um die Simulation mindestens eines Ofentyps mit einem derartigen Backofen zu ermöglichen, sind in dem Speichermodul Temperaturänderungsdaten mindestens eines Ofentyps abgespeichert, wobei das Computerprogrammprodukt beim Ablaufen auf dem Prozessor ein Backprogramm mit vorgegebenen Zeitabschnitten und den Zeitabschnitten zugeordneten Solltemperaturen ausführt, wobei durch den Prozessor aus den Temperaturänderungsdaten, den Zeitabschnitten und den Solltemperaturen ein zeitlicher Verlauf der Temperatur im Backraum errechnet wird und der Brenner derart eingestellt wird, dass die Backraumtemperatur dem errechneten zeitlichen Verlauf der Temperatur folgt.

Es ist zu erkennen, dass das neuartige Simulationsverfahren für verschiedene Ofentypen bei einem Ofen mit stufenlos einstellbarem Brenner softwaremäßig implementiert werden kann. Die Software ruft aus dem Datenspeichermodul der Steuervorrichtung die Temperaturänderungsdaten sowie die Werte des Backprogramms ab. Durch dieses einfache Softwaretool wird es dem Bäcker ermöglicht, in üblicher Weise ein bestimmtes Backprogramm vorzugeben. Er kann sich darauf verlassen, dass der mit dem genannten Computerprogrammprodukt betriebene Backofen sich entsprechend dem von dem Bäcker gewählten Ofentyp verhält, dessen Temperaturänderungsdaten zur Simulation des Ofenverhaltens verwendet werden.

Die weiter oben beschriebenen Schritte der Ofensteuerung können ebenfalls in dem Programmcode des Computerprogrammprodukts implementiert sein.

Schließlich betrifft die Erfindung einen Backofen mit
- mindestens einem Backraum;
- einem stufenlos einstellaren Brenner zur Erzeugung von Heizgasen;
- mindestens einem von den Heizgasen durchströmten Heizelement an oder in dem Backraum;
- einer Steuervorrichtung mit einem Prozessor zur Steuerung der Temperatur in dem Backraum, welche ein Speichermodul zum Abspeichern der Temperaturwerte eines Backprogramms aufweist.

Um einen Backofen zu ermöglichen, der das Temperaturverhalten eines bestimmten Ofentyps simulieren kann, sind in dem Speichermodul Temperaturänderungsdaten mindestens eines Ofentyps sowie mindestens ein Backprogramm mit vorgegebenen Zeitabschnitten und den Zeitabschnitten zugeordneten Solltemperaturen abgespeichert, wobei die Steuervorrichtung dazu eingerichtet ist, aus den Temperaturänderungsdaten, den Zeitabschnitten und den Solltemperaturen einen zeitlicher Verlauf der Temperatur im Backraum zu errechnen und den Brenner derart einzustellen, dass die Backraumtemperatur dem errechneten zeitlichen Verlauf der Temperatur folgt.

In der Praxis kann der Backofen mindestens einen Temperatursensor aufweisen, der einen Temperaturmesswert abgibt, und dass die Steuervorrichtung zum Regeln des Brenners unter Berücksichtigung des Temperaturmesswerts ausgelegt ist. Der Temperatursensor ermöglicht die Bildung einer geschlossenen Regelschleife, welche eine zuverlässige Simulation des Temperaturverlaufs des gewünschten und gewählten Ofentyps ermöglicht.

In der Praxis kann in dem Datenspeicher der Steuervorrichtung dieses Backofens ein Computerprogrammprodukt nach der oben beschriebenen Art abgespeichert sein, das auf dem Prozessor der Steuervorrichtung ausführbar ist. Ausführungsformen des oben beschriebenen Verfahrens und Backofens werden nachfolgend unter Bezugnahme auf die beigefügten Zeichnungen beschrieben.
- Figur 1: zeigt schematisch eine geschnittene Darstellung eines Back-ofens mit stufenlos einstellbarem Brenner.
- Figur 2: zeigt schematisch die Einbindung der Steuervorrichtung des Backofens aus Figur 1.
- Figur 3: zeigt den Ablauf des Verfahrens zur Steuerung des Backofens aus Figur 1.
- Figur 4: zeigt beispielhaft die Temperaturverläufe bei dem Betrieb eines Etagenofens gemäß der hier beschriebenen Ausführungsform gegenüber einem Etagenofen aus dem Stand der Technik.

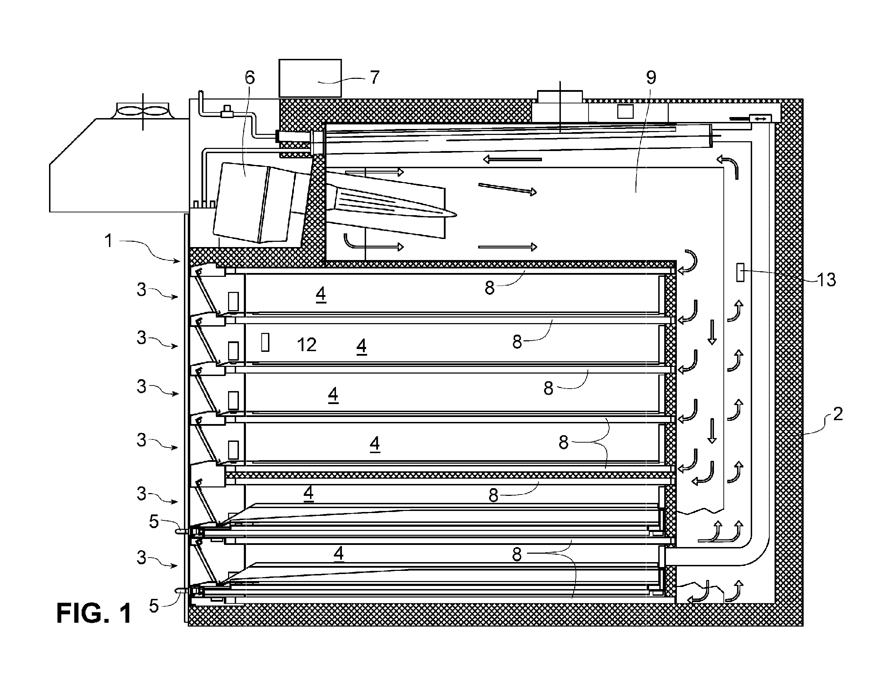

Der in Figur 1 dargestellte Backofen 1 weist ein wärmedämmendes Gehäuse 2 auf. Das Gehäuse ist in sechs Etagen 3 aufgeteilt, von denen jede einen Backraum 4 bildet. In den unteren Backräumen 4 sind Auszugsherde 5 dargestellt. Diese Darstellungen fehlen in den oberen Backräumen 4 aus Gründen der Übersichtlichkeit. Bei der dargestellten Ausführungsform ist ein stufenlos einstellbarer Brenner 6 im oberen Bereich des Gehäuses angeordnet. Als stufenloser Brenner kann beispielsweise ein Gasbrenner der Firma Max Weishaupt GmbH aus Schwendi mit der Typenbezeichnung WG5 verwendet werden. Dieser Brenner ist in einem Leistungsbereich zwischen 12,5 und 50 kW einstellbar.

Schematisch ist auf dem Backofengehäuse 2 eine Steuervorrichtung 7 dargestellt. In der Praxis kann diese Steuervorrichtung 7 in dem Gehäuse 2 integriert werden und seitlich oder unterhalb der Backräume 4 angeordnet sein. Die Eingabe/Ausgabevorrichtung für die Bedienung der Steuervorrichtung besteht meist aus einem Display, entweder einem Touch-Display oder einem Display mit zusätzlicher Tastatur und ist meist an der Frontseite des Backofens angeordnet, an der auch die Ofentüren liegen.

In dem Brenner 6 oberhalb der Backräume 4 ist ein Gebläse integriert, welches Frischluft fördert. Mit dem Sauerstoff dieser Frischluft wird in dem Brenner 6 ein Brennstoff verbrannt und die Heizgase strömen in den Energieteil 9 des Backofengehäuses 2. Die Heizgase strömen von hier aus in Radiatoren 8, die entlang der Oberseite und der Unterseite der Backräume 4 verlaufen. Die Radiatoren 8 bilden die mit Heizgas durchströmten Heizelemente.

Die Heizgase strömen nach dem Durchströmen der Radiatoren 8 zurück zu dem Brenner 6.

Desweiteren ist der Backofen mit einer Vorrichtung zur Erzeugung von Wasserdampf versehen, der als sogenannter Backschwaden in die Backräume 4 eingeleitet werden kann.

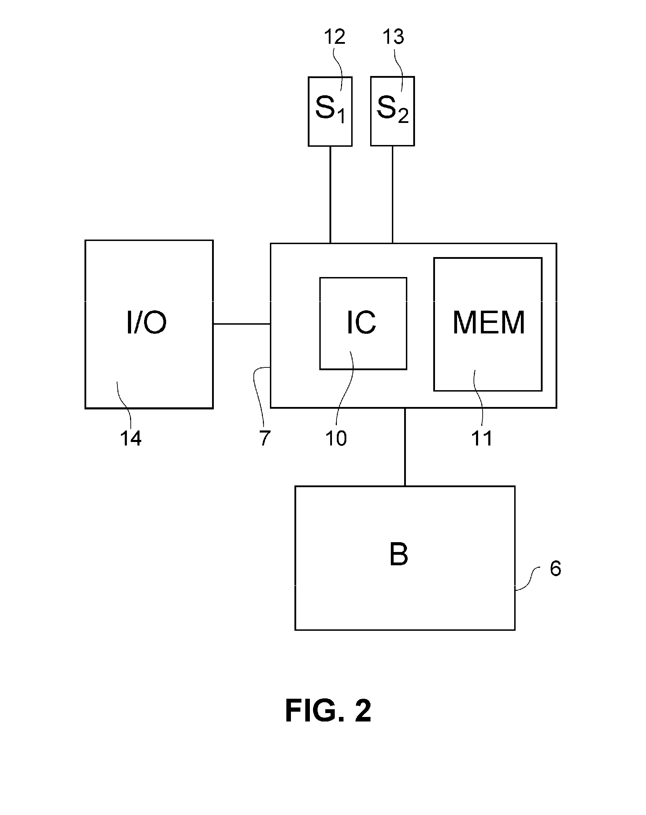

Die Steuervorrichtung 7 und ihr Zusammenwirken mit den weiteren Bauelementen des Backofens 1 aus Figur 1 ist in der Figur 2 dargestellt. Die Steuervorrichtung 7 umfasst einen Prozessor 10 und ein Datenspeichermodul 11. An die Steuerung 7 sind zwei Temperatursensoren 12, 13 angeschlossen, von denen zum Beispiel der Temperatursensor 12 in dem Backraum 4 und der Temperatursensor 13 in dem Rückstrom des Heizgases angeordnet ist (siehe Figur 1). Die Steuerung 7 ist mit einem Eingabe-/Ausgabemodul 14 verbunden. Das Eingabe-/Ausgabemodul 14 kann einen Bildschirm und eine Tastatur oder einen sogenannten Touch-Screen (berührungsempfindlichen Bildschirm) umfassen.

Die Steuervorrichtung 7 steuert den Betrieb des Brenners 6.

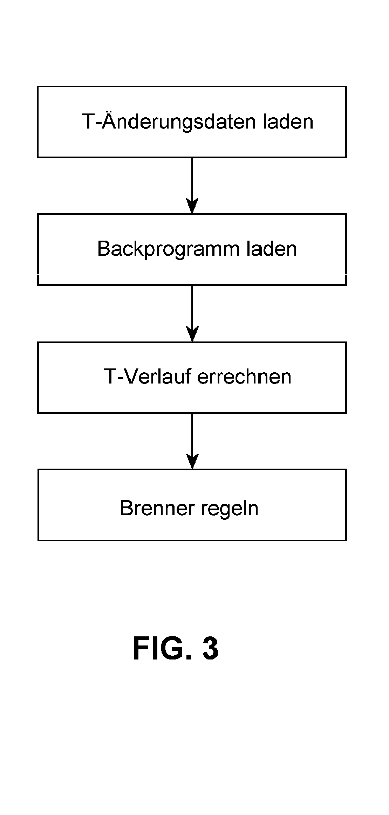

Die Figur 3 zeigt ein Ablaufdiagramm zur Steuerung des Backofens. Zunächst wird aus dem Datenspeichermodul 11 der Steuervorrichtung 7 der Datensatz mit den Temperaturänderungsdaten des zu simulierenden Ofentyps geladen.

Nachfolgend wird aus dem Datenspeichermodul 11 das Backprogramm geladen, in dem üblicherweise bestimmte Zeiträume mit vorgegebenen Solltemperaturen abgespeichert sind.

In dem Prozessor 10 werden aus den Temperaturänderungsdaten und dem Backprogramm die Solltemperaturwerte in den Backräumen 4 zu jedem Zeitpunkt errechnet.

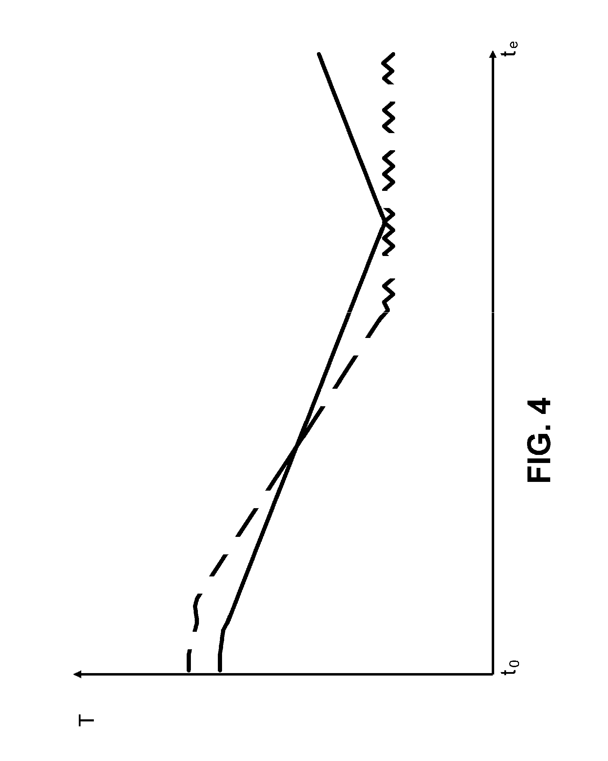

Die Figur 4 zeigt zum einen in gestrichelten Linien den üblichen Temperaturverlauf eines gasbeheizten Etagenofens und zum anderen in einer durchgehenden Linie den Temperaturverlauf eines Thermoöl-Ofens. Der gasbeheizten Etagenofen, dem dieser Temperaturverlauf zugeordnet ist, wird mit einem üblichen intermittierenden Brenner mit einer einzigen Leistungsstufe betrieben. Es ist zu erkennen, dass zu Beginn des Backvorgangs (T₀) in dem gasbeheizten Etagenofen eine sehr hohe Temperatur herrscht. Dies kann zu einem Anflämmen der Backwaren führen. Das Auskühlen des Etagenofens erfolgt sehr schnell, so dass ein niedrigerer Temperaturwert recht früh erreicht wird. Am unteren Temperaturwert wird der Backofen durch intermittierenden Brennerbetrieb gehalten, was zu Temperaturschwankungen führt.

Die Änderungsgeschwindigkeit oder ein Temperaturänderungsprofil des durchgehend gezeichneten Temperaturverlaufs des Thermoöl-Ofens ist in dem Datenspeicher 11 der Steuervorrichtung 7 abgespeichert. Durch entsprechende Einstellungen des stufenlos einstellbaren Brenners 6 kann erreicht werden, dass die Steuervorrichtung 7 den gasbeheizten Etagenofen an beliebige Temperaturverhalten unterschiedlicher Ofentypen anpasst. Wenn das Auskühlverhalten des simulierten Ofentyps verzögert ist, das heißt, wenn der simulierte Ofentyp bei geöffneter Ofentür nur relativ wenig thermische Energie verliert, kann zur Simulation dieses Ofentyps bei dem Etagenofen der Brenner auch bei geöffneter Ofentür betrieben werden.

Wenn die Abkühlgeschwindigkeit des gasbeheizten Etagenofens der beschriebenen Ausführungsform zu gering ist, um dem sich aus den Temperaturänderungsdaten ergebenden Temperaturverlauf des simulierten Ofentyps zu folgen, kann das Gebläse des Brenners 7 ohne Brennstoffzufuhr betrieben werden, so dass es Umgebungsluft bei Umgebungstemperatur in die Radiatoren 8 bläst, welche die Backräume 4 kühlt.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1: Backofen
- 2: wärmedämmendes Gehäuse
- 3: Etage
- 4: Backraum
- 5: Auszugsherd
- 6: Brenner
- 7: Steuervorrichtung
- 8: Radiator
- 9: Energieteil
- 10: Prozessor
- 11: Speichermodul
- 12: Temperatursensor
- 13: Temperatursensor
- 14: Eingabe/Ausgabemodul

## Patentansprüche

1. Verfahren zur Steuerung eines Backofens (1) mit:
• mindestens einem Backraum (4);
• einem stufenlos einstellaren Brenner (6) zur Erzeugung von Heizgasen;
• mindestens einem von den Heizgasen durchströmten Heizelement (8) an oder in dem Backraum (4);
• einer Steuervorrichtung (7) mit einem Prozessor (10) zur Steuerung der Temperatur in dem Backraum (4), welche ein Speichermodul (11) zum Abspeichern der Temperaturwerte eines Backprogramms aufweist;
**dadurch gekennzeichnet, dass** in dem Speichermodul (11) Temperaturänderungsdaten mindestens eines Ofentyps abgespeichert sind und dass ein Backprogramm mit vorgegebenen Zeitabschnitten und den Zeitabschnitten zugeordneten Solltemperaturen vorgegeben wird, wobei durch den Prozessor (10) der Steuervorrichtung (7) aus den Temperaturänderungsdaten, den Zeitabschnitten und den Solltemperaturen ein zeitlicher Verlauf der Temperatur im Backraum (4) errechnet wird und wobei die Steuervorrichtung (7) den Brenner (6) derart einstellt, dass die Backraumtemperatur dem errechneten zeitlichen Verlauf der Temperatur folgt.

2. Verfahren nach Anspruch 1, **dadurch gekennzeichnet, dass** die Temperaturänderungsdaten durch Temperaturmessungen während des Betriebs eines Ofens des Ofentyps ermittelt werden.

3. Verfahren nach einem der vorangehenden Ansprüche, **dadurch gekennzeichnet, dass** an dem Backofen (1) mindestens ein Temperatursensor (12, 13) angeordnet ist, der einen Temperaturmesswert abgibt, und dass die Steuervorrichtung (7) den Brenner (6) unter Berücksichtigung des Temperaturmesswerts regelt.

4. Verfahren nach einem der vorangehenden Ansprüche, **dadurch gekennzeichnet, dass** in dem Speichermodul (11) Temperaturänderungsdaten mehrerer Ofentypen abgespeichert sind und dass ein Nutzer über eine Eingabevorrichtung (14) einen Ofentyp auswählt.

5. Verfahren nach einem der vorangehenden Ansprüche, **dadurch gekennzeichnet, dass** über eine Eingabevorrichtung (14) Daten der in den Backofen (1) eingebrachten Backwaren eingegeben werden, welche durch den Prozessor (10) bei der Errechnung des zeitlichen Verlaufs der Temperatur im Backraum (4) berücksichtigt werden.

6. Verfahren nach einem der vorangehenden Ansprüche, **dadurch gekennzeichnet, dass** zum Erzielen eines Temperaturverhaltens des Ofentyps, dessen Temperaturänderungsdaten verwendet werden, während der Öffnung des Backofens (1) der Brenner (6) betrieben wird.

7. Verfahren nach einem der vorangehenden Ansprüche, **dadurch gekennzeichnet, dass** zum Erzielen eines Temperaturverhaltens des Ofentyps, dessen Temperaturänderungsdaten verwendet werden, während einer Temperaturabsenkung ein Gebläse des Brenners (6) ohne Brennstoffzufuhr betrieben wird, so dass die kalte Brennerluft durch das Heizelement (8) strömt.

8. Computerprogrammprodukt zum Steuern und/oder Regeln des Betriebs eines Backofens (1) mit
• mindestens einem Backraum (4);
• einem stufenlos einstellaren Brenner (6) zur Erzeugung von Heizgasen;
• mindestens einem von den Heizgasen durchströmten Heizelement (8) an oder in dem Backraum (4);
• einer Steuervorrichtung (7) mit einem Prozessor (10) zur Steuerung der Temperatur in dem Backraum, welche ein Speichermodul (11) zum Abspeichern der Temperaturwerte eines Backprogramms aufweist;
**dadurch gekennzeichnet, dass** in dem Speichermodul (11) Temperaturänderungsdaten mindestens eines Ofentyps abgespeichert sind und dass das Computerprogrammprodukt beim Ablaufen auf dem Prozessor (10) ein Backprogramm mit vorgegebenen Zeitabschnitten und den Zeitabschnitten zugeordneten Solltemperaturen ausführt, wobei durch den Prozessor (10) aus den Temperaturänderungsdaten, den Zeitabschnitten und den Solltemperaturen ein zeitlicher Verlauf der Temperatur im Backraum (4) errechnet wird und der Brenner (6) derart eingestellt wird, dass die Backraumtemperatur dem errechneten zeitlichen Verlauf der Temperatur folgt.

9. Computerprogrammprodukt nach Anspruch 8, **dadurch gekennzeichnet, dass** es Programmcode enthält, der beim Ablaufen auf dem Prozessor (10) die Schritte des Verfahrens nach einem der Ansprüche 3 bis 7 ausführt.

10. Backofen (1) mit
• mindestens einem Backraum (4);
• einem stufenlos einstellaren Brenner (6) zur Erzeugung von Heizgasen;
• mindestens einem von den Heizgasen durchströmten Heizelement (8) an oder in dem Backraum (4);
• einer Steuervorrichtung (7) mit einem Prozessor (10) zur Steuerung der Temperatur in dem Backraum (4), welche ein Speichermodul (11) zum Abspeichern der Temperaturwerte eines Backprogramms aufweist;
**dadurch gekennzeichnet, dass** in dem Speichermodul (11) Temperaturänderungsdaten mindestens eines Ofentyps sowie mindestens ein Backprogramm mit vorgegebenen Zeitabschnitten und den Zeitabschnitten zugeordneten Solltemperaturen abgespeichert sind, wobei die Steuervorrichtung (7) dazu eingerichtet ist, aus den Temperaturänderungsdaten, den Zeitabschnitten und den Solltemperaturen einen zeitlicher Verlauf der Temperatur im Backraum (4) zu errechnen und den Brenner (6) derart einzustellen, dass die Backraumtemperatur dem errechneten zeitlichen Verlauf der Temperatur folgt.

11. Backofen (1) nach Anspruch 10, **dadurch gekennzeichnet, dass** er mindestens einen Temperatursensor aufweist, der einen Temperaturmesswert abgibt, und dass die Steuervorrichtung (7) zum Regeln des Brenners (6) unter Berücksichtigung des Temperaturmesswerts ausgelegt ist.

12. Backofen (1) nach Anspruch 10 oder 11, **dadurch gekennzeichnet, dass** in dem Datenspeicher der Steuervorrichtung (7) ein Computerprogrammprodukt nach Anspruch 8 oder 9 abgespeichert ist, das auf dem Prozessor (10) der Steuervorrichtung (7) ausführbar ist.
